# EUROPÄISCHE PATENTSCHRIFT

(11) **EP 1 570 328 B1**
(45) Veröffentlichungstag und Bekanntmachung des Hinweises auf die Patenterteilung: **26.03.2008**
(21) Anmeldenummer: 03779544.0
(22) Anmeldetag: 11.12.2003
(51) Int. Cl.: G05D 16/20, B29C 47/90

(54) **VERFAHREN ZUR REGELUNG DER VAKUUMVERSORGUNG VON KALIBRIERWERKZEUGEN**
METHOD FOR REGULATING THE VACUUM SUPPLY OF CALIBRATION TOOLS
PROCEDE POUR REGULER L'ALIMENTATION EN VIDE D'OUTILS DE CALIBRAGE

(30) Priorität: 12.12.2002 AT 8382002 U
(43) Veröffentlichungstag der Anmeldung: 07.09.2005
(73) Patentinhaber: Technoplast Kunststofftechnik Gesellschaft m.b.H., 4563 Micheldorf (AT)
(72) Erfinder: SCHWAIGER, Meinhard, A-4040 Linz (AT)
(74) Vertreter: Babeluk, Michael
(86) Internationale Anmeldenummer: PCT/AT2003/000368
(87) Internationale Veröffentlichungsnummer: WO 2004/053614

(56) Entgegenhaltungen:
- EP-A- 0 659 536
- DE-A- 3 301 556
- GB-A- 2 313 570
- US-B1- 6 419 454

## Beschreibung

Die Erfindung betrifft ein Verfahren zur Regelung der Vakuumversorgung von Kalibrierwerkzeugen gemäß dem Oberbegriff von Patentanspruch 1.

Eine Extrusionslinie zur Erzeugung von Kunststoffprofilen besteht üblicherweise aus einem Extruder mit einer Extrusionsdüse, an dem Kalibrierwerkzeuge anschließen, um das erzeugte Profil zu kalibrieren und abzukühlen. Unmittelbar stromabwärts der Extrusionsdüse werden meist sogenannte Trockenkalibrierwerkzeuge eingesetzt, das sind im Allgemeinen wassergekühlte Metallblöcke mit einer der Außenkontur des Profils entsprechenden Kalibrieröffnung, an die seitlich Vakuumschlitze anschließen. Die Vakuumschlitze stehen mit Vakuumpumpen in Verbindung, um das Profil an die Wand des Kalibrierkanals anzupressen, damit durch einen innigen Kontakt des noch weichen Profils mit der Wand des Kalibrierkanals einerseits die gewünschte Form des Profils sichergestellt wird und andererseits ein guter Wärmeübergang und damit eine schnelle Abkühlung erreicht wird. An die Trockenkalibrierwerkzeuge schließen Kalibrierbäder an, das sind Wannen, in denen das nunmehr zumindest teilweise erstarrte Profil durch direkten Kontakt mit einem Kühlmedium weiter abgekühlt wird, wobei in den Wannen Kalibrierblenden angeordnet sind, um das Profil zu führen und dimensionsmäßig stabil zu halten. Auch in den Wannen liegt ein Unterdruck vor, um einen sicheren Kontakt des Profils mit den Kalibrierblenden zu gewährleisten.Eine solche Lösung ist in der EP 0 659 536 A der Anmelderin der vorliegenden Anmeldung beschrieben. Eine ähnliche Lösung ist in der GB 2 313 570 A offenbart.

Üblicherweise wird jedes Kalibrierwerkzeug an eine oder mehrere Vakuumpumpen angeschlossen, um den erforderlichen Unterdruck herzustellen. Die Vakuumpumpen müssen dabei auf den maximalen Bedarf hin ausgelegt werden, der sich aus dem Anfahrzustand, d.h. beim Produktionsstart, ergibt, wenn die Profilaußenkontur erstmals an die Werkzeugoberfläche angesaugt werden muss. Daraus ergibt sich der Nachteil, dass In den meisten Betriebszuständen von den Vakuumpumpen ein zu starkes Vakuum erzeugt wird, das entsprechend vermindert werden muss, um Schäden am Profil zu vermeiden. Da Vakuumpumpen im Allgemeinen sehr schlecht regelbar sind, wird die Druckerhöhung, d.h. die Verringerung des Unterdrucks, bei bekannten Werkzeugen im Allgemeinen dadurch bewirkt, dass ein Regelventil vorgesehen ist, das einen Vakuumraum des Werkzeugs mit der Umgebung verbindet. Wenn der Druck im Werkzeug unter einen bestimmten Sollwert absinkt, dann wird das Regelventil geöffnet, um gezielt Falschluft zuzuführen und somit den Druck in dem gewünschten Bereich zu halten. Die Regelung kann dabei automatisiert oder manuell erfolgen. Lösungen dieser Art sind in der DE 33 01 556 C und in der JP 05 131 525 A offenbart.

Mit dem beschriebenen Verfahren ist es zwar möglich, den Druck innerhalb eines Werkzeugs auf einem vorbestimmten Druckniveau zu halten, der Energieaufwand ist jedoch relativ hoch. In modernen Kalibrierwerkzeugen wird ein Großteil der erforderlichen Energie von der Vakuumversorgung verbraucht.

Die US 6,419,454 B zeigt ein Druckluftversorgungssystem mit mehreren Druckluftpumpen, die einzeln ansteuerbar sind. Ein Hinweis auf die Ausgestaltung von Vakuumversorgungssystemen wir hier nicht gegeben.

Aufgabe der vorliegenden Erfindung ist es, den Energieaufwand zu verringern und ein Verfahren zur Druckregelung anzugeben, bei dem ohne bedeutenden apparativen Mehraufwand eine signifikante Energieeinsparung erzielt wird.

Eine weitere Aufgabe der vorliegenden Erfindung ist es, die Genauigkeit bei der Einstellung des Unterdrucks in den einzelnen Kalibrierwerkzeugen zu erhöhen, um dadurch eine Steigerung der Qualität des hergestellten Profils zu erreichen.

Erfindungsgemäß werden diese Aufgaben werden diese Aufgabe durch die Merkmale vom Patentanspruch 1 gelöst. Wesentlich an der vorliegenden Erfindung ist, dass die Regelung des Drucks in den einzelnen Kalibrierwerkzeugen nicht über eine Falschluftzufuhr aus der Umgebung erfolgt, sondern dass die Druckregelung in dem Strömungsweg zwischen dem Kalibrierwerkzeug und den Vakuumpumpen erfolgt. Ein weiterer wesentlicher Aspekt des erfindungsgemäßen Verfahrens besteht darin, dass nicht einzelne Vakuumpumpen mit einzelnen Werkzeugen verbunden sind, sondern, dass zwischen den Vakuumpumpen und den Werkzeugen ein gemeinsamer Druckbehälter zwischengeschaltet ist. Die unterschiedlichen Druckniveaus, die für die einzelnen Kalibrierwerkzeuge erforderlich sind, werden durch Regelventile eingestellt, die zwischen dem gemeinsamen Druckbehälter und den einzelnen Kalibrierwerkzeugen angeordnet sind. Auf diese Weise müssen die Vakuumpumpen nur die wirklich für die Aufrechterhaltung des Vakuums notwendige Leistung erbringen, die durch die unvermeidbaren Falschluftströme größtenteils an den Eintritts- und Austrittsquerschnitten des Profils vorgegeben ist.

Ein weiterer Vorteil des erfindungsgemäßen Verfahrens besteht darin, dass der Unterdruck in den Kalibrierwerkzeugen mit geringerer Schwankungsbreite regelbar ist, so dass eine Qualitätserhöhung der hergestellten Profile erreicht werden kann.

Die Druckregelung im Trockenkalibrierwerkzeug kann insbesondere dadurch wesentlich vereinfacht werden, dass die Luft aus dem Trockenkalibrierwerkzeug über einen ersten Wasserabscheider abgesaugt wird, der dem ersten Regelventil vorgeschaltet ist. Der Wasserabscheider dient dabei nicht nur zur Abscheidung des mit der Luft gemeinsam abgesaugten Wassers oder Kühlmediums, sondern auch als Pufferspeicher, der allzu schnelle Druckänderungen ausgleicht und verhindert. In gleicher Weise ist es bevorzugt, wenn die Luft aus dem Kalibrierbad über einen zweiten Wasserabscheider abgesaugt wird, der dem zweiten Regelventil vorgeschaltet ist.

Ein besonders energiesparendes und kostengünstiges Merkmal des erfindungsgemäßen Verfahrens ist dadurch gegeben, dass an dem gemeinsamen Druckbehälter mehrere Vakuumpumpen angeschlossen sind und dass die Druckregelung in dem gemeinsamen Druckbehälter durch Ein- bzw. Ausschalten einzelner Vakuumpumpen durchgeführt wird. Auf diese Weise kann jede Vakuumpumpe stets im optimalen Betriebspunkt arbeiten. Wenn der Druck über eine zulässige Höchstgrenze ansteigt, wird eine zusätzliche Vakuumpumpe zugeschaltet, und umgekehrt wird bei einem Absinken des Drucks unter einen unteren Grenzwert eine Vakuumpumpe abgeschaltet, um den Druck im gemeinsamen Druckbehälter im zulässigen Bereich zu halten. Der Druck im gemeinsamen Druckbehälter wird dabei bevorzugt so eingestellt, dass auch das Werkzeug mit dem höchsten Vakuumbedarf ausreichend bedient werden kann. Es ist daher vorgesehen, dass die Druckregelung in dem gemeinsamen Druckbehälter von einem Sollwert ausgeht, der dem Minimalwert der in den einzelnen Kalibrierwerkzeugen einzustellenden Druck entspricht oder diesen geringfügig unterschreitet.

Weiters betrifft die Erfindung eine Vorrichtung zur regelbaren Vakuumversorgung von Kalibrierwerkzeugen, umfassend mindestens ein Trockenkalibrierwerkzeug und mindestens ein Kalibrierbad, mit mindestens einer Vakuumpumpe und mit mindestens einem Regelventil. Die erfindungsgemäße Vorrichtung ist dadurch gekennzeichnet, dass ein gemeinsamer Druckbehälter vorgesehen ist, der mit mindestens einem Trockenkalibrierwerkzeug über ein erstes Regelventil verbunden ist und der mit mindestens einem Kalibrierbad über ein zweites Regelventil verbunden ist. Wie oben bereits erläutert, ist es für die Erfindung wesentlich, dass die Regelventile nicht zwischen den Kalibrierwerkzeugen und der Umgebung, sondern zwischen den Kalibrierwerkzeugen und dem gemeinsamen Druckbehälter vorgesehen sind.

Energetisch besonders bevorzugt ist es, wenn das Trockenkalibrierwerkzeug luftseitig ausschließlich mit dem gemeinsamen Druckbehälter in Verbindung steht und wenn das Kalibrierbad luftseitig ausschließlich mit dem gemeinsamen Druckbehälter in Verbindung steht. Auf diese Weise können Energieverluste durch die Regelventile weitgehend vermieden werden. Ein besonders günstiges Betriebsverhalten kann dadurch erreicht werden, dass vorzugsweise der gemeinsame Druckbehälter mindestens ein Volumen aufweist, das der nominellen Förderleistung aller Vakuumpumpen von ein bis fünf Sekunden bei dem Druck-Sollwert des gemeinsamen Druckbehälters entspricht. Insbesondere können auf diese Weise die Druckschwankungen durch das alternierende Ein- und Ausschalten einzelner Vakuumpumpen in engen Grenzen gehalten werden. Weiters ist es in diesem Zusammenhang günstiger, wenn die Anzahl der Vakuumpumpen zwischen drei und fünf beträgt. Auf diese Weise wird bei vertretbarem apparativem Aufwand eine ausreichend feine Abstufung der Gesamtleistung der Vakuumpumpen gewährleistet.

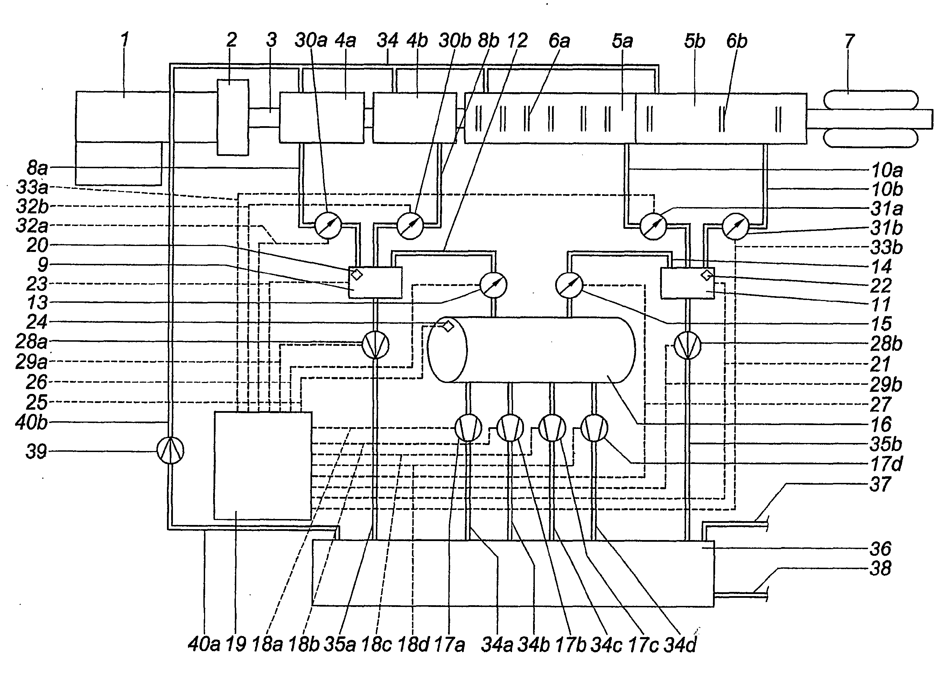

In der Folge wird die Erfindung anhand des in der Figur dargestellten Ausführungsbeispiels näher erläutert.

Die Figur zeigt schematisch eine erfindungsgemäße Vorrichtung, die auf eine Extrusionslinie angewendet ist.

Die Extrusionslinie der Figur besteht aus einem Extruder 1 mit einer Extrusionsdüse 2 zur Herstellung einen Kunststoffprofils 3. Das Kunststoffprofil 3 wird in einem ersten Trockenkalibrierwerkzeug 4a abgekühlt und kalibriert. Stromabwärts des ersten Trockenkalibrierwerkzeugs 4a ist ein weiteres Trockenkalibrierwerkzeug 4b angeordnet, an das auf stromabwärtiger Seite ein Kalibrierbad 5a mit einer Vielzahl von Blenden 6 anschließt, dem gegebenenfalls weitere Kalibrierbäder folgen, wie etwa im vorliegenden Ausführungsbeispiel das weitere Kalibrierbad 5b. Ein schematisch dargestellter Raupenabzug 7 dient dazu, die erforderliche Zugkraft am Profil 3 bereitzustellen.

Die Trockenkalibrierwerkzeuge 4a, 4b stehen über Vakuumleitungen 8a, 8b mit einem ersten Wasserabscheider 9 in Verbindung. In gleicher Weise sind die Kalibrierbäder 5a, 5b über Vakuumleitungen 10a, 10b mit einem zweiten Wasserabscheider 11 verbunden. Die Wasserabscheider 9, 11 dienen dazu, ein gegebenenfalls gemeinsam mit der abgesaugten Luft mitgerissenes Kühlmittel abzuscheiden, um Leistungsverluste der Vakuumpumpen und Störungen der Regelventile durch mitgeführtes Kühlmedium zu vermeiden. Eine weitere Funktion der Wasserabscheider ist die von Pufferbehältern, die Druckschwankungen aufnehmen und ausgleichen können, um das Regelverhalten zu verbessern.

Die Wasserabscheider 9, 11 stehen jeweils über eine Saugleitung 12, 14 mit einem gemeinsamen Druckbehälter 16 in Verbindung in den Saugleitungen 12, 14 ist jeweils ein Druckregelventil 13, 15 vorgesehen, das dazu dient, den Druck in den Wasserabscheidern 9, 11 weitgehend unabhängig von dem Druck in dem gemeinsamen Druckbehälter 16 einstellen zu können. An den Druckbehälter 16 sind insgesamt vier Vakuumpumpen 17a, 17b, 17c, 17d angeschlossen, um den erforderlichen Unterdruck im gemeinsamen Druckbehälter aufbauen zu können. Die Vakuumpumpen 17a, 17b, 17c, 17d stehen über Steuerleitungen 18 mit einer Regelungseinrichtung 19 in Verbindung. Weiters sind in den Wasserabscheidern 9, 11 Drucksensoren 20, 22 vorgesehen, die jeweils über Signalleitungen 21, 23 mit der Regelungseinrichtung 19 in Verbindung stehen. Ein weiterer Drucksensor 24 erfasst den Druck im gemeinsamen Druckbehälter 16 und steht über eine Signalleitung 25 ebenfalls mit der Regelungseinrichtung 19 in Verbindung. Die Regelventile 13, 15 werden von der Regelungseinrichtung 19 ebenfalls über Steuerleitungen 26, 27 angesteuert.

In weiterer Folge können mittels zusätzlicher Regelungsventile 30a, 30b mit den zugehörigen Steuerleitungen 32a, 32b in den Trockenkalibrierwerkzeugen 4a, 4b unterschiedliche Unterdrücke realisiert werden. Mittels zusätzlicher Regelungsventile 31a, 31b und Steuerleitungen 33a, 33b können auch in den Kalibrierbädern 5a, 5b unterschiedliche Unterdrücke erzeugt werden.

Abgeschiedenes Kühlmedium wird aus den Wasserabscheidern 9 und 11 mittels der Wasserpumpen 28a und 28b, die über Steuerleitungen 29a und 29b mit der Steuerungseinheit 19 in Verbindung stehen, in einen zentralen Wasserbehälter 36 oder in einen Kühlmedienrücklaufkanal abgesaugt und mittels Förderleitungen 35a und 35b gefördert.

Mitgefördertes Kühlmedium der Vakuumpumpen 17a bis 17d wird ebenfalls in den zentralen Wasserbehälter 36 oder in einen Kühlmedienrücklaufkanal mittels Förderleitungen 34a bis 34d gefördert.

Frisches Kühlmedium wird mit einer Förderleitung 37 zugefödert, überschüssiges Kühlmedium wird über eine Abflussleitung 38 abgefördert. Aus dem Kühlmedientank 36 fördert eine Kühlmedienpumpe 39 mittels der Saugleitung 40a und der Druckleitung 40b Kühlmedium zu den Trockenkalibern 4a, 4b und zu den Kühlwannen der Kalibrierbäder 5a, 5b.

In der Folge wird der Betrieb der erfindungsgemäßen Vorrichtung anhand des dargestellten Ausführungsbeispiels näher erläutert. Um einen optimal ablaufenden Extrusionsvorgang zu erreichen, bei dem eine bestmögliche Profilqualität erzielt wird, ist es erforderlich, in den Kalibrierwerkzeugen 4a, 4b; 5 einen vorbestimmten Unterdruck möglichst genau einzustellen. Der Unterdruck liegt bei den Trockenkalibrierwerkzeugen 4a, 4b im Allgemeinen bei etwa 0,15 bar absolut und beim Kalibriertank bei etwa 0,8 bar absolut.

Bei diesen Werten handelt es sich jedoch nur um grobe Richtwerte, da die genauen Werte von einer Vielzahl von Parametern abhängen, wie etwa Art und Größe des Profil, Extrusionsgeschwindigkeit, Typ des Werkzeugs und dergleichen. Die erforderlichen Drücke können anfänglich von Fachleuten auf dem Gebiet grob abgeschätzt werden, und werden im Anschluss daran bei der Abstimmung des Werkzeugs durch Versuche genauer festgelegt. Bei dem in der Figur dargestellten Ausführungsbeispiel wird angenommen, dass die beiden Trockenkalibrierwerkzeuge 4a, 4b an einem gemeinsamen Wasserabscheider 9 angeschlossen sind und dementsprechend mit dem gleichen Unterdruck beaufschlagt werden. Falls im Einzelfall eine getrennte Regelung der beiden Trockenkalibrierwerkzeuge 4a, 4b erforderlich ist, kann dies in einfacher Weise dadurch realisiert werden, dass jedem Trockenkalibrierwerkzeug 4a, 4b ein eigener Wasserabscheider mit einem eigenen Regelventil zugeordnet ist. In gleicher Weise können mehrere Kalibrierbäder 5 vorgesehen sein, die ebenfalls gemeinsam oder getrennt regelbar ausgeführt sind.

In der Regelungseinrichtung 19 ist zunächst ein Sollwert für den Druck im gemeinsamen Druckbehälter 16 vorgegeben, der dem niedrigsten erforderlich Druck in einem der Kalibrierwerkzeuge 4a, 4b; 5 entspricht oder diesen Druck geringfügig, das heißt beispielsweise um 0,01 bar unterschreitet. Um diesen Druck aufzubauen, werden zunächst sämtliche Vakuumpumpen 17a, 17b, 17c, 17d in Betrieb gesetzt und nach Erreichen des Druckniveaus teilweise abgeschaltet. In weiterer Folge wird das Druckniveau durch Abschalten bzw. Einschalten einzelner Vakuumpumpen 17a, 17b, 17c, 17d im Bereich des Sollwertes gehalten. Auf diese Weise kann ein Teillastbetrieb der Vakuumpumpen 17a, 17b, 17c, 17d vermieden werden. Über die Regelventile 13, 15 kann der Druck in den Wasserabscheidern 9, 11 und damit in den Kalibrierwerkzeugen 4a, 4b; 5 im Bereich der Sollwerte gehalten werden, die durch eine Bedienungsperson oder eine andere Regeleinrichtung vorgegeben sind. Es ist auch möglich, die Regelventile 13, 15 händisch zu betätigen, falls dies in Spezialfällen erforderlich ist. Wesentlich ist, dass es an den Kalibrierwerkzeugen 4a, 4b; 5 keine Regelventile oder dergleichen gibt, die eine gezielte Falschluftzufuhr bewirken.

Die vorliegende Erfindung ermöglicht es, den Energiebedarf von Extrusionslinien durch Verringerung des Aufwands für die Vakuumbereitstellung wesentlich zu verringern. Weiters kann durch das erfindungsgemäße Verfahren und die erfindungsgemäße Vorrichtung eine genauere Regelung des Unterdrucks in den Kalibrierwerkzeugen erreicht werden.

## Patentansprüche

1. Verfahren zur Regelung der Vakuumversorgung von mindestens ein Trockenkalibrierwerkzeug (4a, 4b) und mindestens ein Kalibrierbad (5a, 5b) umfassenden Kalibrierwerkzeugen (4a, 4b; 5a, 5b), bei welchem Verfahren mindestens eine Vakuumpumpe (17a, 17b, 17c, 17d) mit einem Kalibrierwerkzeug (4a, 4b; 5a, 5b) in Verbindung gebracht wird, um Luft aus dem Kalibrierwerkzeug (4a, 4b; 5a, 5b) abzusaugen, wobei der Druck im Kalibrierwerkzeug (4a, 4b; 5a, 5b) durch ein Regelventil (13, 15) auf einen Sollwert geregelt wird, **dadurch gekennzeichnet, dass** mehrere Vakuumpumpen (17a, 17b, 17c, 17d) Luft aus einem gemeinsamen Druckbehälter (16) absaugen und dass die Luft aus mindestens einem Trockenkalibrierwerkzeug (4a, 4b) über ein erstes Regelventil (13) in den gemeinsamen Druckbehälter (16) abgesaugt wird und dass weiteres die Luft aus mindestens einem Kalibrierbad (5a, 5b) über ein zweites Regelventil (15) in den gemeinsamen Druckbehälter (16) abgesaugt wird.

2. Verfahren nach Anspruch 1, **dadurch gekennzeichnet, dass** die Luft aus dem Trockenkalibrierwerkzeug (4a, 4b) über einen ersten Wasserabscheider (9) abgesaugt wird, der dem ersten Regelventil (13) vorgeschaltet ist.

3. Verfahren nach einem der Ansprüche 1 oder 2, **dadurch gekennzeichnet, dass** die Luft aus dem Kalibrierbad (5a, 5b) über einen zweiten Wasserabscheider (11) abgesaugt wird, der dem zweiten Regelventil (15) vorgeschaltet ist.

4. Verfahren nach einem der Ansprüche 1 bis 3, **dadurch gekennzeichnet, dass** die Druckregelung in dem gemeinsamen Druckbehälter (16) durch Ein- bzw. Ausschalten einzelner Vakuumpumpen (17a, 17b, 17c, 17d) durchgeführt wird.

5. Verfahren nach Anspruch 4, **dadurch gekennzeichnet, dass** die Druckregelung in dem gemeinsamen Druckbehälter (16) von einem Sollwert ausgeht, der dem Minimalwert der in den einzelnen Kalibrierwerkzeugen (4a, 4b; 5a, 5b) einzustellenden Druck entspricht oder diesen geringfügig unterschreitet.

6. Vorrichtung zur regelbaren Vakuumversorgung von mindestens ein Trockenkalibrierwerkzeug (4a, 4b) und mindestens ein Kalibrierbad (5a, 5b) umfassenden Kalibrierwerkzeugen (4a, 4b; 5a, 5b), mit mindestens einer Vakuumpumpe (17a, 17b, 17c, 17d) und mit mindestens einem Regelventil (13, 15), **dadurch gekennzeichnet, dass** ein gemeinsamer Druckbehälter (16) vorgesehen ist, der mit mindestens einem Trockenkalibrierwerkzeug (4a, 4b) über ein erstes Regelventil (13) verbunden ist und der mit mindestens einem Kalibrierbad (5a, 5b) über ein zweites Regelventil (15) verbunden ist und dass mehrere Vakuumpumpen (17a, 17b, 17c, 17d) mit dem gemeinsamen Druckbehälter (16) verbunden sind.

7. Vorrichtung nach Anspruch 6, **dadurch gekennzeichnet, dass** stromaufwärts des ersten Regelventils (13) ein erster Wasserabscheider (9) vorgesehen ist.

8. Vorrichtung nach Anspruch 6 oder 7, **dadurch gekennzeichnet, dass** stromaufwärts des zweiten Regelventils (15) ein zweiter Wasserabscheider (11) vorgesehen ist.

9. Vorrichtung nach einem der Ansprüche 6 bis 8, **dadurch gekennzeichnet, dass** mehrere Vakuumpumpen (17a, 17b, 17c, 17d) in Parallelschaltung mit dem gemeinsamen Druckbehälter (16) verbunden sind.

10. Vorrichtung nach Anspruch 9, **dadurch gekennzeichnet, dass** eine Regelungseinrichtung (19) vorgesehen ist, die den Druck im gemeinsamen Druckbehälter (16) durch Ein- bzw. Ausschalten einzelner Vakuumpumpen (17a, 17b, 17c, 17d) regelt.

11. Vorrichtung nach einem der Ansprüche 6 bis 10, **dadurch gekennzeichnet, dass** das Trockenkalibrierwerkzeug (4a, 4b) luftseitig ausschließlich mit dem gemeinsamen Druckbehälter (16) in Verbindung steht.

12. Vorrichtung nach einem der Ansprüche 6 bis 11, **dadurch gekennzeichnet, dass** das Kalibrierbad (5a, 5b) luftseitig ausschließlich mit dem gemeinsamen Druckbehälter (16) in Verbindung steht.

13. Vorrichtung nach einem der Ansprüche 6 bis 12, **dadurch gekennzeichnet, dass** der gemeinsame Druckbehälter (16) mindestens ein Volumen aufweist, das der nominellen Förderleistung aller Vakuumpumpen (17a, 17b, 17c, 17d) von ein bis fünf Sekunden bei dem Druck-Sollwert des gemeinsamen Druckbehälters (16) entspricht.

14. Vorrichtung nach einem der Ansprüche 6 bis 13, **dadurch gekennzeichnet, dass** die Anzahl der Vakuumpumpen (17a, 17b, 17c, 17d ) zwischen drei und fünf beträgt.

## Claims

1. A method for regulating the vacuum supply of calibration tools (4a, 4b; 5a, 5b) comprising at least one dry calibration tool (4a, 4b) and at least one calibration bath (5a, 5b), by which method at least one vacuum pump (17a, 17b, 17c, 17d) is connected to a calibration tool (4a, 4b; 5a, 5b), in order to draw air from said calibration tool (4a, 4b; 5a, 5b), the pressure in said calibration tool (4a, 4b; 5a, 5b) being regulated to a target value by means of a control valve (13, 15), **characterized in that** a plurality of vacuum pumps (17a, 17b, 17c, 17d) draw air from a common pressure tank (16) and that the air is drawn from at least one dry calibration tool (4a, 4b) through a first control valve (13) into the common pressure tank (16) and that further the air is drawn from at least one calibration bath (5a, 5b) through a second control valve (15) into the common pressure tank (16).

2. The method according to claim 1, **characterized in that** the air is drawn from the dry calibration tool (4a, 4b) through a first water separator (9) mounted upstream of the first control valve (13).

3. The method according to any one of the claims 1 or 2, **characterized in that** the air is drawn from the calibration bath (5a, 5b) through a second water separator (11) mounted upstream of the second control valve (15).

4. The method according to any one of the claims 1 through 3, **characterized in that** pressure regulation in the common pressure tank (16) is performed by respectively switching discrete vacuum pumps (17a, 17b, 17c, 17d) on and off.

5. The method according to claim 4, **characterized in that** pressure regulation in the common pressure tank (16) starts from a target value that either corresponds to the minimum value of the pressure to be set in the discrete calibration tools (4a, 4b; 5a, 5b) or slightly falls below said minimum value.

6. A device for regulating the vacuum supply of calibration tools (4a, 4b; 5a, 5b) comprising at least one dry calibration tool (4a, 4b) and at least one calibration bath (5a, 5b), with at least one vacuum pump (17a, 17b, 17c, 17d) and with at least one control valve (13, 15), **characterized in that** there is provided a common pressure tank (16) that is connected to at least one dry calibration tool (4a, 4b) through a first control valve (13) and that is connected to at least one calibration bath (5a, 5b) through a second control valve (15) and that a plurality of vacuum pumps (17a, 17b, 17c, 17d) are connected to the common pressure tank (16).

7. The device according to claim 6, **characterized in that** a first water separator (9) is provided upstream of the first control valve (13).

8. The device according to claim 6 or 7, **characterized in that** a second water separator (11) is provided upstream of the second control valve (15).

9. The device according to any one of the claims 6 through 8, **characterized in that** a plurality of vacuum pumps (17a, 17b, 17c, 17d) are mounted in parallel with the common pressure tank (16).

10. The device according to claim 9, **characterized in that** there is provided a control system (19) that regulates the pressure in the common pressure tank (16) by switching discrete vacuum pumps (17a, 17b, 17c, 17d) on and off.

11. The device according to any one of the claims 6 through 10, **characterized in that** on the air side the dry calibration tool (4a, 4b) communicates with the common pressure tank (16) only.

12. The device according to any one of the claims 6 through 11, **characterized in that** on the air side the calibration bath (5a, 5b) communicates with the common pressure tank (16) only.

13. The device according to any one of the claims 6 through 12, **characterized in that** the common pressure tank (16) comprises at least one volume that corresponds to the nominal pump capacity of all of the vacuum pumps (17a, 17b, 17c, 17d) of one to five seconds at the pressure target value of the common pressure tank (16).

14. The device according to any one of the claims 6 through 13, **characterized in that** there are provided between three and five vacuum pumps (17a, 17b, 17c, 17d).

## Revendications

1. Procédé de régulation de l'alimentation en vide d'au moins un outil de calibrage à sec (4a, 4b) et d'au moins un bain de calibrage (4a, 5b) comprenant des outils de calibrage (4a, 4b ; 5a, 5b), procédé selon lequel on met en liaison au moins une pompe à vide (17a, 17b, 17c, 17d) avec un outil de calibrage (4a, 4b ; 5a, 5b) pour aspirer de l'air de l'outil de calibrage (4a, 4b ; 5a, 5b), la pression dans l'outil de calibrage (4a, 4b ; 5a, 5b) étant régulée par une vanne de réglage (13, 15) sur une valeur de consigne,
**caractérisé en ce que**
plusieurs pompes à vide (17a, 17b, 17c, 17d) aspirent de l'air dans un réservoir de pression (16), commun, et l'air est aspiré d'au moins un outil de calibrage à sec (4a, 4b) par une première vanne de réglage (13) dans un réservoir de pression commun (16) et en outre l'air est aspiré d'au moins un bain de calibrage (5a, 5b) par au moins une seconde vanne de réglage (15) du réservoir de pression (16), commun.

2. Procédé selon la revendication 1,
**caractérisé en ce que**
l'air est aspiré de l'outil de calibrage à sec (4a, 4b) par l'intermédiaire d'un premier séparateur d'eau (9) installé en amont de la première vanne de réglage (13).

3. Procédé selon l'une des revendications 1 ou 2,
**caractérisé en ce qu'**
on aspire l'air du bain de calibrage (5a, 5b) en passant par un second séparateur d'eau (11), en amont de la seconde vanne de réglage (15).

4. Procédé selon l'une des revendications 1 à 3,
**caractérisé en ce qu'**
on effectue le réglage de la pression dans un réservoir de pression commun (16) par le branchement ou la coupure de différentes pompes à vide (17a, 17b, 17c, 17d).

5. Procédé selon la revendication 4,
**caractérisé en ce que**
la régulation de pression dans le réservoir de pression commun (16) se fait à partir d'une valeur de consigne correspondant à la valeur minimale de la pression à régler dans les différents outils de calibrage (4a, 4b ; 5a, 5b) ou passant légèrement en dessous de cette pression.

6. Dispositif d'alimentation réglable en vide d'au moins un outil de calibrage à sec (4a, 4b) d'au moins un bain de calibrage (5a, 5b) comprenant des outils de calibrage (4a, 4b ; 5a, 5b) avec au moins une pompe à vide (17a, 17b, 17c, 17d) et au moins une vanne de réglage (13, 15)
**caractérisé par**
un réservoir de pression (16), commun, relié à au moins un outil de calibrage à sec (4a, 4b) par une première vanne de réglage (13) et relié à au moins un bain de calibrage (5a, 5b) par une seconde vanne de réglage (15) et plusieurs pompes à vides (17a, 17b, 17c, 17d) sont reliées au réservoir de pression (16), commun.

7. Dispositif selon la revendication 6,
**caractérisé par**
un premier séparateur d'eau (9) en amont de la première vanne de réglage (13).

8. Dispositif selon les revendications 6 ou 7,
**caractérisé par**
un second séparateur d'eau (11) en amont de la seconde vanne de réglage (15).

9. Dispositif selon l'une des revendications 6 à 8,
**caractérisé par**
plusieurs pompes à vide (17a, 17b, 17c, 17d) branchées en parallèle sur le réservoir de pression (16) commun.

10. Dispositif selon la revendication 9,
**caractérisé par**
une installation de régulation (19) qui régule la pression dans le réservoir de pression (16) commun en branchant/coupant différentes pompes à vide (17a, 17b, 17c, 17d).

11. Dispositif selon l'une des revendications 6 à 10,
**caractérisé en ce que**
l'outil de calibrage à sec (4a, 4b) communique, côté air, exclusivement avec le réservoir de pression (16) commun.

12. Dispositif selon l'une des revendications 6 à 11,
**caractérisé en ce que**
le bain de calibrage (5a, 5b) communique, côté air, exclusivement avec le réservoir de pression (16) commun.

13. Dispositif selon l'une des revendications 6 à 12,
**caractérisé en ce que**
le réservoir de pression commun (16) a au moins un volume qui correspond au débit nominal de toutes les pompes à vide (17a, 17b, 17c, 17d) pour une durée de une à cinq secondes, à la valeur de consigne de la pression du réservoir de pression (16) commun.

14. Dispositif selon l'une des revendications 6 à 13,
**caractérisé en ce que**
le nombre de pompes à vide (17a, 17b, 17c, 17d) est compris entre trois et cinq.
